# EUROPÄISCHE PATENTSCHRIFT

(11) **EP 1 208 319 B1**
(45) Veröffentlichungstag und Bekanntmachung des Hinweises auf die Patenterteilung: **18.02.2004**
(21) Anmeldenummer: 00984908.4
(22) Anmeldetag: 29.11.2000
(51) Int. Cl.: F16H 61/02

(54) **VERFAHREN ZUR ERMITTLUNG EINER SCHALTSTUFE FÜR EIN DISKRET SCHALTENDES KRAFTFAHRZEUGGETRIEBE**
METHOD FOR DETERMINING A SHIFTING STEP FOR A DISCRETELY SHIFTING TRANSMISSION OF A MOTOR VEHICLE
PROCEDE DE DETERMINATION D'UN RAPPORT POUR UNE TRANSMISSION A CHANGEMENT DE VITESSES DISCRET DE VEHICULE AUTOMOBILE

(30) Priorität: 24.12.1999 DE 19962962
(43) Veröffentlichungstag der Anmeldung: 29.05.2002
(73) Patentinhaber: ROBERT BOSCH GMBH, 70442 Stuttgart (DE)
(72) Erfinder: LOEFFLER, Jürgen, 71364 Winnenden (DE); BOLZ, Martin-Peter, 71720 Oberstenfeld (DE); HÜELSER, Holger, 70329 Stuttgart (DE)
(86) Internationale Anmeldenummer: PCT/DE2000/004245
(87) Internationale Veröffentlichungsnummer: WO 2001/048398

(56) Entgegenhaltungen:
- DE-A- 19 625 936
- US-A- 4 226 295
- US-A- 4 698 763
- US-A- 4 964 318
- US-A- 5 172 609
- US-A- 5 484 350

## Beschreibung

Die Erfindung betrifft ein Verfahren zur Ermittlung einer Schaltstufe für ein diskret schaltendes Kraftfahrzeuggetriebe mit den im Oberbegriff des Anspruchs 1 genannten Merkmalen.

### Stand der Technik

Aus dem Stand der Technik sind Lösungen bekannt, bei denen eine Übersetzung des Kraftfahrzeuggetriebes zur Einstellung einer optimalen Motordrehzahl genutzt wird. Allerdings setzen alle diese Lösungsansätze ein stufenlos schaltbares Automatikgetriebe voraus. Auf diskret schaltende Getriebe lassen sich die bisherigen Verfahren jedoch nicht ohne weiteres übertragen.

Bei diskret schaltenden Getrieben, wie beispielsweise Stufenautomaten oder automatisierten Schaltgetrieben, kann es in bestimmten Betriebssituationen zu sogenannten Pendelschaltungen kommen, bei denen in schneller Abfolge zwischen den einzelnen Gängen gewechselt wird. Derartige Pendelschaltungen können zu Störungen im Fahrverhalten des Fahrzeuges führen und müssen daher nach Möglichkeit unterdrückt werden. Aus der gattungsbildenden DE 196 25 936 ist bekannt, den einzelnen Schaltstufen Übersetzungsbereiche zuzuordnen, in denen eine Schaltung unterdrückt wird. Die Applikation der zu den einzelnen Schaltstufen gehörigen Übersetzungsbereiche ist allerdings sehr aufwendig. So sind alle Übersetzungsbereiche von vornherein vorzugeben, was insbesondere sehr aufwendig ist, wenn zusätzliche Parameter, wie eine Fahrsituation oder eine Fahrereigenschaft, mit aufgenommen werden sollen.

### Vorteile der Erfindung

Mittels des erfindungsgemäßen Verfahrens mit den im Anspruch 1 genannten Merkmalen ist es möglich, die Ermittlung der Schaltstufe für eine optimale Motordrehzahl wesentlich zu vereinfachen, ohne dass es zu Pendelschaltungen kommen kann. Dadurch, dass
(a) berechnete und/oder gemessene Eingangsdrehzahlen des Getriebes für die Schaltstufen erfasst werden,
(b) über eine Hystereseschaltung eine Hysteresedrehzahl für jede Schaltstufe festgelegt wird,
(c) eine Differenz aus der Eingangsdrehzahl einer nächsthöheren Schaltstufe und der Hysteresedrehzahl eine Hochschaltgrenze sowie eine Summe aus der aktuellen Eingangsdrehzahl und der Hysteresedrehzahl eine Rückschaltgrenze liefert,
(d) beim Überschreiten der Hochschaltgrenze über die optimale Motordrehzahl eine Schaltung in eine höhere Schaltstufe oder beim Überschreiten der optimalen Motordrehzahl über die Rückschaltgrenze eine Schaltung in eine niedrigere Schaltstufe erfolgt (Schaltnotwendigkeit),
ist die Applikation der Schaltstufenwahl wesentlich vereinfacht worden.

Weiterhin hat es sich als vorteilhaft erwiesen, die Hystereseschaltung anhand eines Kennfeldes festzulegen, in das Parameter, wie eine Fahrereigenschaft und/oder eine momentane Fahrsituation, einfließen können. Unter Fahrereigenschaft ist beispielsweise ein von dem Fahrer vorgebbares Fahrverhalten hinsichtlich Verbrauch oder Leistung zu verstehen. Die momentane Fahrsituation kann insbesondere durch Einflüsse auf die Hystereseschaltung beim Stadtfahrbetrieb, beim Stop&Go-Fahrbetrieb oder bei einem Fahrbetrieb unter erhöhter Last berücksichtigt werden.

In einer bevorzugten Ausgestaltung des Verfahrens werden für jede Schaltstufe eine Obergrenze für die Eingangsdrehzahl vorgegeben. Beim Überschreiten der Obergrenze wird eine Schaltung in eine höhere Schaltstufe erzwungen. In gleicher Weise wird für jede Schaltstufe eine Untergrenze für die Eingangsdrehzahl vorgegeben, bei deren Unterschreitung eine Schaltung in eine niedrigere Schaltstufe erfolgt. Mit diesen unabhängig von der Hystereseschaltung applizierten Ober- und Untergrenzen (Schaltstufenbegrenzer) können maximale und minimale Drehzahlen für die jeweilige Schaltstufe vorgegeben werden, in denen ein langzeitstabiler Betrieb möglich ist.

Ist die Notwendigkeit eines Hochschaltens entweder durch Überschreiten der Obergrenze oder durch Überschreiten der Hochschaltgrenze über die optimale Motordrehzahl gegeben, so erfolgt vorzugsweise eine Schaltung in die nächstfolgende höhere Schaltstufe, in der die für diese Schaltstufe ermittelte Hochschaltgrenze noch nicht die optimale Motordrehzahl überschreitet. In gleicher Weise kann beim Vorliegen einer Notwendigkeit zur Rückschaltung verfahren werden. In diesem Fall erfolgt die Schaltung in die nächstfolgende niedrigere Schaltstufe dann, wenn die für diese Schaltstufe ermittelte Rückschaltgrenze noch nicht die optimale Motordrehzahl unterschritten hat. Auf diese Weise kann das Hoch- beziehungsweise Rückschalten kontinuierlich über aufeinanderfolgende Schaltstufen erzwungen werden, jedoch in Extremfällen auch eine Schaltung über mehrere Schaltstufen hinweg ermöglicht werden.

Die Eingangsdrehzahlen können in bevorzugter Weise anhand der Ausgangsdrehzahl und den gegebenen Übersetzungen der Schaltstufen berechnet werden, so dass auf einen zusätzlichen Drehzahlsensor an der Getriebeeingangswelle verzichtet werden kann.

Weitere vorteilhafte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: ein Blockschaltbild zur Ermittlung einer Hochschalt- und Rückschaltgrenze;
- Figur 2: ein Blockschaltbild zur Ermittlung einer Schaltnotwendigkeit und
- Figur 3: ein Blockschaltbild zur Festlegung der Hysteresedrehzahl und einer Ober- beziehungsweise Untergrenze für jede Schaltstufe (Schaltstufenbegrenzer).

### Beschreibung des Ausführungsbeispieles

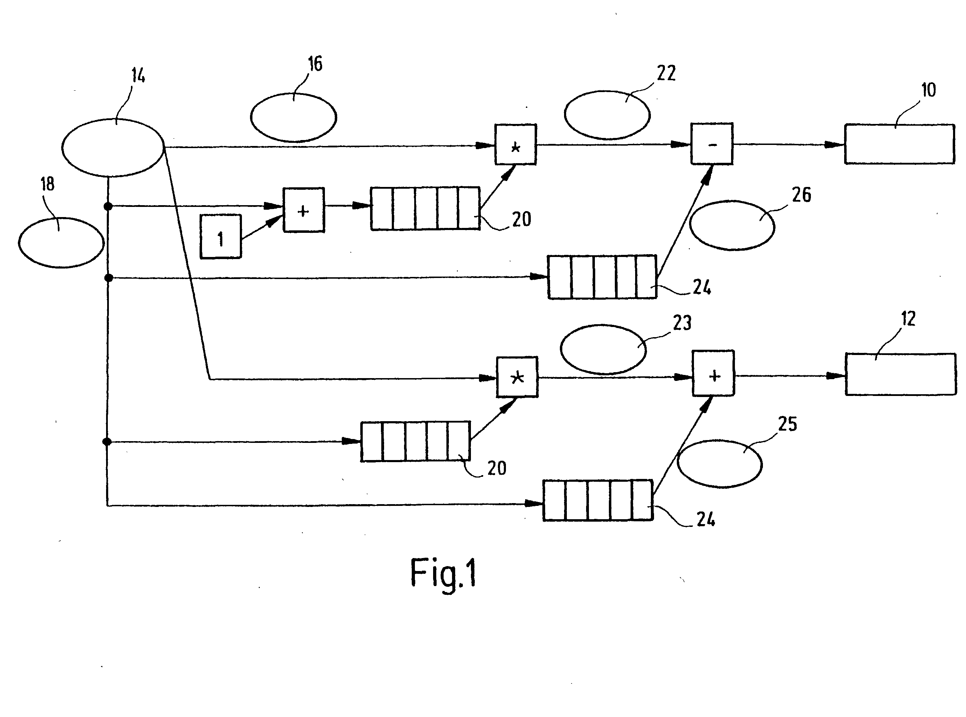

In der Figur 1 ist ein Blockschaltbild dargestellt, das die Ermittlung einer Hochschaltgrenze 10 beziehungsweise einer Rückschaltgrenze 12 für einzelne Schaltstufen eines diskret schaltenden Kraftfahrzeuggetriebes 14 verdeutlichen soll. Je nach Auslegung des Getriebes 14, beispielsweise als Stufenautomat oder automatisiertes Schaltgetriebe, sind eine unterschiedliche Anzahl von Schaltstufen 1, 2,..., n mit streng monoton fallenden Übersetzungen vorhanden. Jeder Schaltstufe kann demnach eine Übersetzung zugeordnet werden. Das Getriebe weist motorseitig ein geeignetes Antriebsglied auf, das von einem Fahrzeugmotor mit einer Kraft beaufschlagt wird. Entsprechend einer Motordrehzahl ergibt sich für das Antriebsglied eine Eingangsdrehzahl, die zwar prinzipiell direkt erfasst werden kann, jedoch wesentlich sicherer in nachfolgender Weise berechnet werden kann.

Zunächst wird eine Ausgangsdrehzahl 16 des Getriebes 14 erfasst (zum Beispiel über einen angeordneten Drehzahlsensor). Weiterhin ist eine aktuelle Schaltstufe 18 gegeben. Wie bereits erläutert, werden die einzelnen Schaltstufen entsprechend einer fallenden Übersetzung nummeriert. Mit Hilfe der Ausgangsdrehzahl 16 und den in einem Kennfeld 20 hinterlegten Übersetzungen der einzelnen Schaltstufen lassen sich Eingangsdrehzahlen 22, 23 für jede mögliche Schaltstufe berechnen. So zeigt der obere Teil der Figur 1 die Ermittlung der Eingangsdrehzahl 22 für eine nächsthöhere Schaltstufe als die gerade aktuelle Schaltstufe 18. Die Eingangsdrehzahl 23 des unteren Teils der Figur 1 entspricht der aktuellen Eingangsdrehzahl. In diesem Sinne lassen sich selbstverständlich für alle vorhandenen Schaltstufen Eingangsdrehzahlen ermitteln. Zur Reduzierung des Applikationsaufwandes hat es sich als vorteilhaft erwiesen, lediglich Eingangsdrehzahlen zur aktuellen Schaltstufe und benachbarten Schaltstufen zu ermitteln. Selbstverständlich kann die aktuelle Eingangsdrehzahl (23) auch durch einen geeigneten Drehzahlsensor direkt erfasst werden.

Über eine Hystereseschaltung 24 wird zumindest in Abhängigkeit von der jeweiligen Schaltstufe eine Hysteresedrehzahl 25, 26 festgelegt. Durch Subtraktion der Hysteresedrehzahl 26 von der Eingangsdrehzahl 22 der nächsthöheren Schaltstufe ergibt sich die Hochschaltgrenze 10, während die Summe aus der Hysteresedrehzahl 25 und der aktuellen Eingangsdrehzahl 23 zur Rückschaltgrenze 12 führt.

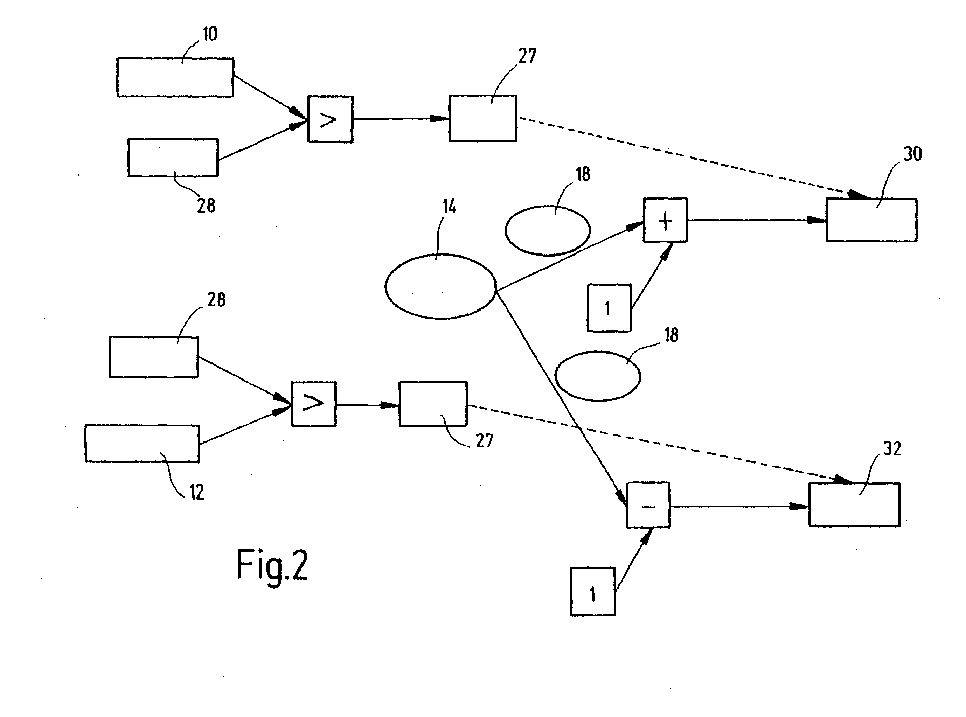

Zur Ermittlung einer Schaltnotwendigkeit 27 werden die Hochschaltgrenze 10 und die Rückschaltgrenze 12 mit einer optimalen Hysteresedrehzahl 28 des Motors verglichen. Überschreitet die Hochschaltgrenze die optimale Hysteresedrehzahl 28 beziehungsweise überschreitet die optimale Hysteresedrehzahl 28 die Rückschaltgrenze 12, so liegt Schaltnotwendigkeit 27 vor (siehe Figur 2).

Ist die optimale Hysteresedrehzahl 28 durch die Hochschaltgrenze 10 überschritten worden, so wird eine Schaltung in eine höhere Schaltstufe - gemäß dem Ausführungsbeispiel in die nächsthöhere Schaltstufe 30-erzwungen. Besteht Notwendigkeit zum Rückschalten, so wird eine niedrigere Schaltstufe - hier die nächstniedrigere Schaltstufe 32 - eingestellt. Prinzipiell ist es denkbar, an Stelle einer solchen kontinuierlichen Hoch- beziehungsweise Rückschaltung auch mehrere Schaltstufen auf einmal zu überspringen. Es hat sich jedoch als vorteilhaft erwiesen, diese Art von Schaltung nur insofern zuzulassen, wenn die ermittelte Hochschaltgrenze der nächstfolgenden höheren Schaltstufe ebenfalls überschritten wird, oder wenn die ermittelte Rückschaltgrenze der nächstfolgenden niedrigeren Schaltstufe die optimale Motordrehzahl 28 unterschreitet.

Die Festlegung der Hysteresedrehzahl 25, 26 erfolgt - wie bereits erläutert - unter Berücksichtigung der jeweiligen Schaltstufe über die Hystereseschaltung 24. Es ist ferner denkbar, weitere Parameter in die Hystereseschaltung 24 einfließen zu lassen. Beispielhaft seien hier erwähnt eine Fahrereigenschaft 34, eine Fahrsituation 36 oder eine Betriebssituation 38. Die Fahrereigenschaft 34 beinhaltet dabei Größen, die insbesondere ein verbrauchsoptimiertes oder leistungsoptimiertes Fahrverhalten des Fahrzeugführers berücksichtigen. Legt der Fahrzeugführer beispielsweise Wert auf eine Minimierung des Kraftstoffverbrauchs, so werden im Allgemeinen die Hysteresedrehzahl 25, 26 verringert, um eine möglichst schnelle Einstellung der optimalen Drehzahl 28 zu ermöglichen.

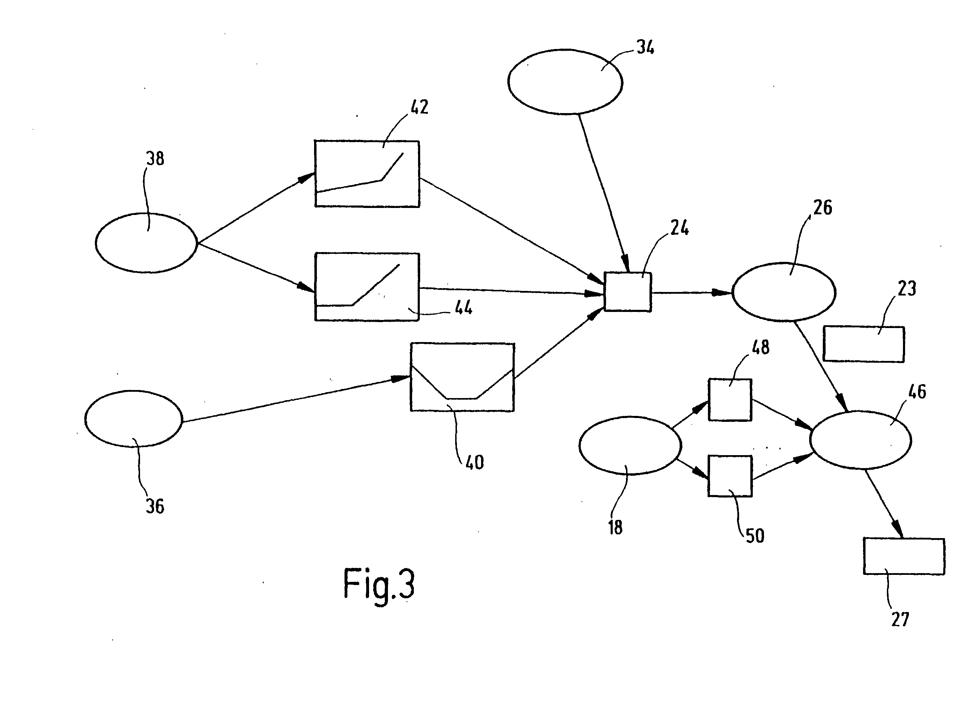

Für bestimmte Fahrsituationen 36 kann es vorteilhaft sein, in das Kennfeld weitere Parameter aufzunehmen. So zeigt die Figur 3 eine Kennlinie 40, die zur Berücksichtigung eines Fahrbetriebes unter erhöhter Last (beispielsweise Bergauffahrt) in das Kennfeld einfließen kann.

In gleicher Weise kann bestimmten Betriebssituationen 38 Genüge getan werden, wenn beispielsweise die Kennlinien 42, 44 für einen Stadtfahrbetrieb und einen Stop&Go-Fahrbetrieb zur Ermittlung der Drehzahlen 25, 26 in die Hystereseschaltung 24 aufgenommen werden.

Durch einen Schaltstufenbegrenzer 46 kann zusätzlich eine Einhaltung vorgegebener Drehzahlgrenzen sichergestellt werden, so dass eine Schaltung erzwungen wird, auch wenn die Hochschaltgrenze 10 beziehungsweise die Rückschaltgrenze 12 noch nicht über- beziehungsweise unterschritten wurde. Für die jeweils aktuelle Schaltstufe 18 existiert demnach eine Obergrenze 48 und eine Untergrenze 50. Überschreitet die aktuelle Eingangsdrehzahl 23 die Obergrenze 48, so erfolgt eine Hochschaltung, auch wenn die Hochschaltgrenze 10, die über die Drehzahl 25 festgelegt wurde, noch nicht überschritten ist. Ebenso wird ein Runterschalten erzwungen, wenn die aktuelle Eingangsdrehzahl 23 die Untergrenze 50 unterschreitet (in beiden Fällen liegt dann Schaltnotwendigkeit 27 vor). Auch hier kann die Schaltung kontinuierlich zu aufeinanderfolgenden Schaltstufen auf die bereits geschilderte Art und Weise erfolgen.

## Patentansprüche

1. Verfahren zur Ermittlung einer Schaltstufe für ein diskret schaltendes Kraftfahrzeuggetriebe, wobei eine Ausgangsdrehzahl des Getriebes erfasst und eine optimale Motordrehzahl vorgegeben ist, **dadurch gekennzeichnet, dass**
(a) berechnete und/oder gemessene Eingangsdrehzahlen (22, 23) des Getriebes für die Schaltstufen erfasst werden,
(b) über eine Hystereseschaltung (24) eine Hysteresedrehzahl (25, 26) für jede Schaltstufe festgelegt wird,
(c) eine Differenz aus der Eingangsdrehzahl (22) einer nächsthöheren Schaltstufe und der Hysteresedrehzahl (26) eine Hochschaltgrenze (10) sowie eine Summe aus der aktuellen Eingangsdrehzahl (23) und der Hysteresedrehzahl (25) eine Rückschaltgrenze (12) liefert,
(d) beim Überschreiten der Hochschaltgrenze (10) über die optimale Motordrehzahl (28) eine Schaltung in eine höhere Schaltstufe oder beim Überschreiten der optimalen Motordrehzahl (28) über die Rückschaltgrenze (12) eine Schaltung in eine niedrigere Schaltstufe erfolgt.

2. Verfahren nach Anspruch 1, **dadurch gekennzeichnet, dass** die Hystereseschaltung (24) anhand eines Kennfeldes festgelegt wird, in das Parameter wie eine Fahrereigenschaft (34) und/oder eine momentane Fahrsituation (36) und/oder eine Betriebssituation (38) einfließen.

3. Verfahren nach Anspruch 2, **dadurch gekennzeichnet, dass** zur Ermittlung der Parameter bestimmt wird, ob
- der Fahrer ein eher verbrauchsoptimiertes oder leistungsoptimiertes Fahrverhalten vorgegeben hat und/oder
- ein Stadtfahrbetrieb und/oder
- ein Stop&Go-Fahrbetrieb und/oder
- ein Fahrbetrieb unter erhöhter Last vorliegt.

4. Verfahren nach einem der Ansprüche 1 bis 3, **dadurch gekennzeichnet, dass** für jede Schaltstufe eine Obergrenze (48) für die Eingangsdrehzahl vorgegeben wird und beim Überschreiten der Obergrenze (48) eine Schaltung in eine höhere Schaltstufe erfolgt.

5. Verfahren nach einem der Ansprüche 1 bis 4, **dadurch gekennzeichnet, dass** für jede Schaltstufe eine Untergrenze (50) für die Eingangsdrehzahl vorgegeben wird und beim Unterschreiten der Untergrenze (50) eine Schaltung in eine niedrigere Schaltstufe erfolgt.

6. Verfahren nach den Ansprüchen 1 oder 4, **dadurch gekennzeichnet, dass** die Schaltung in die nächstfolgende höhere Schaltstufe erfolgt, in der die für diese Schaltstufe ermittelte Hochschaltgrenze (10) noch nicht die optimale Motordrehzahl (28) überschreitet.

7. Verfahren nach den Ansprüchen 1 oder 5, **dadurch gekennzeichnet, dass** die Schaltung in die nächstfolgende niedrigere Schaltstufe erfolgt, in der die für diese Schaltstufe ermittelte Rückschaltgrenze (12) noch nicht die optimale Motordrehzahl (28) unterschreitet.

8. Verfahren nach einem der vorhergehenden Ansprüche, **dadurch gekennzeichnet, dass** die Eingangsdrehzahlen (22, 23) des Getriebes mit Hilfe der Ausgangsdrehzahl (16) und den gegebenen Übersetzungen der Schaltstufen berechnet wird.

## Claims

1. Method for determining a shift step for a discrete-shift motor vehicle transmission, an output rotational speed of the transmission being detected and an optimum engine rotational speed being predetermined, **characterized in that**
(a) calculated and/or measured input rotational speeds (22, 23) of the transmission for the shift steps are detected,
(b) a hysteresis rotational speed (25, 26) for each shift step is defined via a hysteresis circuit (24),
(c) a difference between the input rotational speed (22) of a next higher shift step and the hysteresis rotational speed (26) supplies an upshift limit (10) and a sum of the current input rotational speed (23) and of the hysteresis rotational speed (25) supplies a downshift limit (12),
(d) when the upshift limit (10) exceeds the optimum engine rotational speed (28), a shift into a higher shift step takes place or, when the optimum engine rotational speed (28) exceeds the downshift limit (12), a shift into a lower shift step takes place.

2. Method according to Claim 1, **characterized in that** the hysteresis circuit (24) is defined by means of a characteristic map which incorporates parameters, such as a driver characteristic (34) and/or an instantaneous driving situation (36) and/or an operating situation (38).

3. Method according to Claim 2, **characterized in that**, in order to determine the parameters, it is ascertained whether
- the driver has predetermined a consumption-optimized or power-optimized driving behaviour and/or
- a town-driving mode and/or
- a stop-and-go driving mode and/or
- a driving mode under increased load is operative.

4. Method according to one of Claims 1 to 3, **characterized in that**, for each shift step, an upper limit (48) for the input rotational speed is predetermined, and, when the upper limit (48) is exceeded, a shift into a higher shift step takes place.

5. Method according to one of Claims 1 to 4, **characterized in that**, for each shift step, a lower limit (50) for the input rotational speed is predetermined, and, when the lower limit (50) is undershot, a shift into a lower shift step takes place.

6. Method according to Claim 1 or 4, **characterized in that** the shift takes place into the next following higher shift step in which the upshift limit (10) determined for this shift step does not exceed the optimum engine rotational speed (28).

7. Method according to Claim 1 or 5, **characterized in that** the shift takes place into the next following lower shift step in which the downshift limit (12) determined for this shift step does not undershoot the optimum engine rotational speed (28).

8. Method according to one of the preceding claims, **characterized in that** the input rotational speeds (22, 23) of the transmission are calculated with the aid of the output rotational speed (16) and the given transmission ratio for the shift steps.

## Revendications

1. Procédé pour déterminer un niveau de commutation pour une boîte de vitesses de véhicule à commutation discrète, selon lequel on saisit la vitesse de rotation de sortie de la boîte de vitesses et on prédéfinit un régime moteur optimum,
**caractérisé en ce que**
(a) on saisit des vitesses de rotation d'entrée (22, 23) calculées et/ou mesurées de la boîte de vitesses pour des niveaux de commutation,
(b) on fixe pour chaque niveau de commutation, une vitesse de rotation d'hystérésis (25, 26) par l'intermédiaire d'un circuit à hystérésis (24),
(c) on détermine une différence entre la vitesse de rotation d'entrée (22) du niveau de commutation directement supérieur et de la vitesse de rotation à hystérésis (26) pour former une limite de commutation haute (10) ainsi qu'une somme de la vitesse de rotation d'entrée actuelle (23) et de la vitesse de rotation d'hystérésis (25) pour fournir une limite de rétrogradation (12),
(d) en cas de dépassement de la limite de commutation haute (10), par le régime moteur optimum (28) on lance une commutation vers un niveau de commutation supérieur ou en cas de dépassement vers le bas du régime moteur optimum (28) au-delà de la limite de rétrogradation (12) on commute vers un niveau de commutation plus bas.

2. Procédé selon la revendication 1,
**caractérisé en ce que**
le circuit à hystérésis (24) fixe à l'aide d'un champ de caractéristiques, comment intégrer un paramètre tel qu'une propriété du conducteur (34) et/ou une situation de conduite instantanée (36) et/ou une situation de fonctionnement (38).

3. Procédé selon la revendication 2,
**caractérisé en ce que**
pour déterminer les paramètres on définit si :
- le conducteur a prédéfini plutôt un comportement de conduite optimisé dans le sens de la consommation ou de la puissance, et/ou
- une conduite en circulation urbaine, et/ou
- un fonctionnement marche/arrêt, et/ou
- une situation de conduite sous charge élevée.

4. Procédé selon l'une quelconque des revendications 1 à 3,
**caractérisé en ce que**
pour chaque niveau de commutation, on prédéfinit une limite supérieure (48) pour la vitesse de rotation d'entrée et en cas de dépassement de la limite supérieure (48) on commute dans un niveau de commutation supérieur.

5. Procédé selon l'une quelconque des revendications 1 à 4,
**caractérisé en ce que**
pour chaque niveau de commutation on prédéfinit une limite inférieure (50) pour la vitesse de rotation d'entrée et en cas de dépassement vers le bas de la limite inférieure (50) on commute vers un niveau de commutation inférieur.

6. Procédé selon l'une quelconque des revendications 1 ou 4,
**caractérisé en ce qu'**
on commute vers le niveau de commutation directement supérieur pour lequel la vitesse de commutation haute (10), obtenue pour ce niveau de commutation ne dépasse pas encore le régime moteur optimum (28).

7. Procédé selon l'une quelconque des revendications 1 ou 5,
**caractérisé en ce qu'**
on commute vers le niveau de commutation directement en dessous dans lequel la limite de rétrogradation (12) obtenue pour ce niveau de commutation n'est pas déjà en dessous du régime moteur optimum (28).

8. Procédé selon l'une quelconque des revendications précédentes,
**caractérisé en ce qu'**
on calcule les vitesses de rotation d'entrée (22, 23) de la boîte de vitesses à l'aide de la vitesse de rotation de sortie (16) et des démultiplications données des niveaux de commutation.
